# EUROPEAN PATENT APPLICATION

(11) **EP 1 457 293 A1**
(43) Date of publication of application: **15.09.2004**
(21) Application number: 04251248.3
(22) Date of filing: 03.03.2004
(51) Int. Cl.: B25F 5/00, F01N 1/10

(54) **Pneumatic tool muffler**

(30) Priority: 13.03.2003 US 388044
(71) Applicant: Ingersoll-Rand Company, Woodcliff Lake, New Jersey 07677 (US)
(72) Inventor: Lucas, Michael J., Mooresville, North Carolina 28115 (US)
(74) Representative: Holmes, Matthew Peter

(57) **Abstract**

A pneumatic tool (10) including a housing (14) defining an interior, an air motor (18) positioned to lie in the interior, an air exhaust conduit (38) having an interior conduit wall (62) defining an air exhaust passageway (36). The air exhaust passageway (36) is in fluid communication with the air motor (18). The pneumatic tool also includes sound-absorbing material defining a muffler passageway (58) there through. The material is positioned to lie within the air exhaust conduit (38) such that the muffler passageway (58) is aligned with the air exhaust passageway (36) and the material lines the interior conduit wall (62), such that the muffler passageway (58) passes exhaust air there through.

## Description

### Background of the Invention

The present invention relates to pneumatic tools and particularly to mufflers for reducing noise created by exhaust air of pneumatic tools.

Conventional pneumatic tools typically utilize some form of muffler to help decrease noise created by air exhausted from the pneumatic tool. In such mufflers, sound-absorbing material is usually positioned along a path through which the exhaust air travels. The exhaust air is forced through the sound-absorbing material before escaping to the atmosphere.

### Summary of the Invention

By forcing the exhaust air to pass through sound-absorbing material, back pressure is generated in the air exhaust passageway of the tool. Increased levels of back pressure in the air exhaust passageway generally result in decreased performance and efficiency of the pneumatic tool.

According to one construction of the present invention, the invention provides a pneumatic tool including a housing defining an interior, an air motor positioned to lie in the interior, an air exhaust conduit having an interior conduit wall defining an air exhaust passageway. The air exhaust passageway is in fluid communication with the air motor. The pneumatic tool also includes sound-absorbing material defining a muffler passageway there through. The material is positioned to lie within the air exhaust conduit such that the muffler passageway is aligned with the air exhaust passageway and the material lines the interior conduit wall, such that the muffler passageway passes exhaust air there through.

According to another construction of the present invention, the invention provides a sound filter for dampening sound produced by a pneumatic tool having an air exhaust duct in a handle of the tool. The exhaust duct includes an interior duct wall. The sound filter includes a perforated tube defining a muffler passageway there through and an exterior tube wall. The perforated tube is positioned within the exhaust duct of the pneumatic tool. The sound filter also includes an open-cell, sound-absorbing material lining the exterior tube wall and the interior duct wall, such that the muffler passageway passes exhaust air there through.

According to yet another construction of the present invention, the invention provides a pneumatic tool including a housing defining an interior cavity, the housing formed to include a handle, an air motor positioned to lie within the interior cavity, an air inlet extending through the handle and communicating compressed air to the air motor to move the air motor, and an air outlet extending through the handle, the air outlet having an inner surface. The pneumatic tool also includes a perforated tube defining a muffler passageway there through and an outer surface. The muffler passageway communicates air away from the air motor. The perforated tube is positioned to lie within the air outlet. The pneumatic tool also includes an annular space defined between the inner surface of the air outlet and the outer surface of the perforated tube, and an open-cell, sound-absorbing material positioned to lie within the annular space such that the material is in mating contact with the inner surface of the air outlet and the outer surface of the perforated tube.

Additional features of the present invention will become apparent to those skilled in the art upon consideration of the following detailed description of preferred embodiments exemplifying the best mode of carrying out the invention as presently perceived.

### Brief Description of the Drawings

FIG. 1 is a side view of a muffler in accordance with the present invention positioned within a handle of a pneumatic tool.
FIG. 2 is a side view of another construction of a muffler in accordance with the present invention positioned in the handle of the pneumatic tool.
FIG. 3. is a side view of a third construction of a muffler in accordance with the present invention positioned in the handle of the pneumatic tool.
FIG. 4 is a side view of a fourth construction of a muffler in accordance with the present invention positioned in the handle of the pneumatic tool.

### Detailed Description of the Drawings

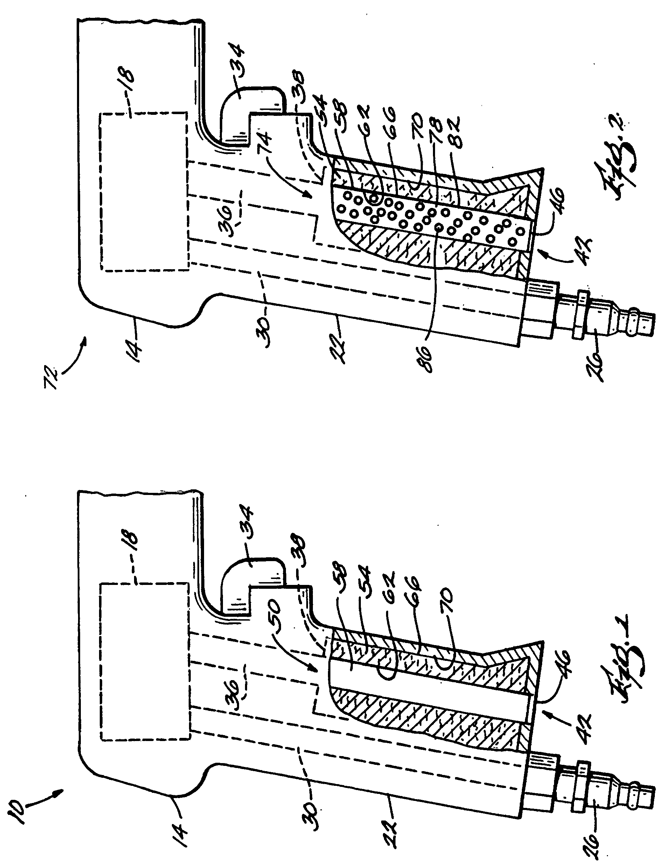

With reference to FIG. 1, a pneumatic hand tool 10 is shown including a housing 14 and an air motor 18 positioned within the housing 14. The housing 14 is formed with a handle 22 to allow a user to grip the hand tool 10. Although the tool 10 shown in FIG. 1 is in the form of an air drill or an impact wrench, the present invention is not limited to only such forms. The present invention may also be used in combination with other pneumatic hand tools such as: cut-off tools, air ratchets, sanders, air hammers, shears, chisels, saws, riveters, die grinders, angle grinders, blow guns, and so forth.

The hand tool 10 includes an air inlet coupling 26, which is fluidly connected to a source (not shown) of compressed air (or other fluid) during operation of the hand tool 10. Also, an air intake conduit 30 formed in the housing 14 of the hand tool 10 defines an air intake passageway between the air inlet coupling 26 and the air motor 18. A trigger assembly 34 is operable to selectively block and unblock the air intake passageway to affect the fluid flow of compressed air through the air motor 18.

When the trigger assembly 34 is depressed, compressed air moves through the air intake passageway and through the air motor 18. The compressed air expands as it moves through the air motor 18 and is exhausted through an air exhaust passageway 36. The air exhaust passageway 36 is defined by an air exhaust duct, or air exhaust conduit 38, formed in the housing 14, such that the air exhaust passageway 36 fluidly connects the air motor 18 and the atmosphere surrounding the exterior of the housing 14. An air outlet 42 is formed in the housing 14 to allow the exhaust air to escape to the atmosphere. In the constructions shown in FIGS. 1-3, the air outlet 42 is formed in the bottom of the handle 22, adjacent the air inlet coupling 26. Also, a perforated plate 46 is coupled to the bottom of the handle 22 over the air outlet 42 to disperse the exhaust air as it escapes from the hand tool 10 and prevent debris from entering the air exhaust conduit 38.

With reference to one construction of the present invention shown in FIG. 1, a sound filter, or muffler 50, is positioned within the air exhaust conduit 38 to obstruct fluid flow through the air exhaust passageway 36, thereby decreasing noise emitted by the exhaust air as it exhausts through the air outlet 42 to the atmosphere. In the construction of FIG. 1, the muffler 50 includes sound-absorbing material 54 defining a muffler passageway 58 there through. The muffler passageway 58 through the sound-absorbing material 54 allows exhaust air to pass substantially unobstructed through the muffler 50. The sound-absorbing material 54 is generally configured as a duct including an interior wall 62 and an exterior wall 66. The exterior wall 66 of the sound-absorbing material 54 is positioned in the air exhaust conduit 38 in intimate mating contact with an interior wall 70 of the air exhaust conduit 38.

The open-cell, sound-absorbing material 54 utilized in the muffler 50 includes, among other types of sound-absorbing materials, interwoven fibers. Such fibers can be natural and/or synthetic polymeric fibers. Examples of useful natural polymeric fibers include, but are not limited to, wool, silk, cotton, and cellulose. Also, examples of useful synthetic polymeric fibers include, but are not limited to, polyester resins, such as polyethylene and polybutylene, polyamide resins such as nylon, and polyolefin resins such as polypropylene and polyethylene, and blends thereof. Alternatively, open-cell, foam-based, sound-absorbing materials 54 may also be used in the muffler 50.

During operation of the hand tool 10 of FIG. 1, exhaust air flowing through the air exhaust passageway 36 passes through the muffler 50 before exhausting to the atmosphere. The muffler passageway 58 through the sound-absorbing material 54 allows at least a portion of the exhaust air to pass through the muffler 50 substantially unobstructed, while at the same time, a portion of the exhaust air may expand into the air exhaust conduit 38 and travel through the sound-absorbing material 54 before re-entering the muffler passageway 58 and exhausting to the atmosphere. As a result, the configuration of the muffler 50 of FIG. 1 provides a decrease in noise emitted by the exhaust air, while also providing an increase in performance (or efficiency) of the hand tool 10 by decreasing the back pressure created by the muffler 50 obstructing the air exhaust passageway 36.

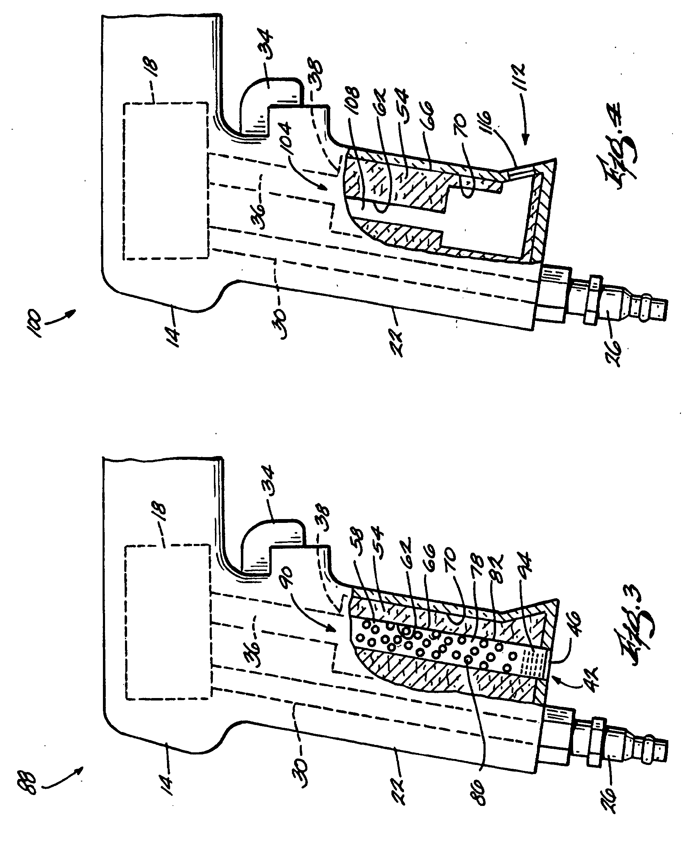

With reference to FIG. 2, another construction of a pneumatic hand tool 72 is shown. The pneumatic hand tool 72 of FIG. 2 is substantially similar to the hand tool 10 of FIG. 1, so description of the hand tool 72 of FIG. 2 is further omitted with like parts being labeled with like reference numerals. A muffler 74 shown in FIG. 2 includes the sound-absorbing material 54 having the muffler passageway 58 there through, and a rigid, perforated tube 78 positioned in the muffler passageway 58 of the sound-absorbing material 54. The exterior wall 66 of the sound-absorbing material 54 is positioned in the air exhaust conduit 38 in intimate mating contact with the interior wall 70 of the air exhaust conduit 38. The rigid perforated tube 78 includes an exterior wall 82 in intimate mating contact with the interior wall 62 of the sound-absorbing material 54. The exhaust air passes through the center of the perforated tube 78, while the sound field accompanying the exhaust air passes through the perforations 86 formed in the perforated tube 78, and is absorbed by the sound-absorbing material 54. In the construction illustrated in FIG. 2, the perforations 86 comprise between about 20% and 30% of the area of the exterior wall 82 of the perforated tube 78. Alternatively, the perforations 86 may be any reasonable size and remain within the spirit and scope of the present invention.

During operation of the hand tool 72 of FIG. 2, exhaust air flowing through the air exhaust passageway 36 passes through the muffler 74 before exhausting to the atmosphere. The perforated tube 78 provides structural integrity to the sound absorbing material 54, while not affecting the acoustical properties of the sound-absorbing material 54. The perforated tube 78 also increases longevity of the sound absorbing material 54 without affecting the acoustical properties of the sound absorbing material 54. As a result, the muffler 74 provides an increase in performance (or efficiency) of the hand tool 72 by decreasing back pressure created by the muffler 74 in the air exhaust conduit 38.

With reference to FIG. 3, yet another construction of a pneumatic hand tool 88 is shown. The pneumatic hand tool 88 illustrated in FIG. 3 is substantially similar to the hand tools 10, 72 of FIGS. 1-2, so description of the hand tool 88 of FIG. 3 is further omitted with like parts being labeled with like reference numerals. A muffler 90 shown in FIG. 3 includes the sound-absorbing material 54 having the muffler passageway 58 there through, the rigid, perforated tube 78 positioned in the muffler passageway 58 of the sound-absorbing material 54, and a plug of sound-absorbing material 94 different from the sound-absorbing material 54. The exterior wall 66 of the sound-absorbing material 54 is positioned in the air exhaust conduit 38 in intimate mating contact with the interior wall 70 of the air exhaust conduit 38. The exterior wall 82 of the rigid perforated tube 78 is in intimate mating contact with the interior wall 62 of the sound-absorbing material 54. The exhaust air passes through the center of the perforated tube 78, while the sound field accompanying the exhaust air passes through the perforations 86 formed in the perforated tube 78, and is absorbed by the sound-absorbing material 54. In the construction illustrated in FIG. 3, the perforations 86 comprise between about 20% and 30% of the area of the exterior wall 82 of the perforated tube 78. Alternatively, the perforations 86 may be any reasonable size and remain within the spirit and scope of the present invention.

As shown in FIG. 3, the plug of sound-absorbing material 94 is positioned in the opening of the perforated tube 78 adjacent the air outlet 42. In one configuration of the muffler 90 of FIG. 3, the sound-absorbing materials 54, 94 of the duct and the plug, respectively, are made from the same material. An example of such a configuration could utilize a foam-based material for both the duct and the plug. In another configuration of the muffler 90 of FIG. 3, the sound-absorbing materials 54, 94 are made from different materials. An example of such a configuration could utilize a foam-based material for the duct of sound-absorbing material 54, while a fiber-based material, such as cotton, is utilized for the plug of sound-absorbing material 94. Further, the perforated plate 46 coupled to the bottom of the handle 22 over the air outlet 42 secures the plug of sound-absorbing material 94 in the opening of the perforated tube 78.

During operation of the hand tool 88 of FIG. 3, exhaust air flowing through the air exhaust passageway 36 passes through the muffler 90 before exhausting to the atmosphere. The exhaust air passes through the center of the perforated tube 78, while the sound field accompanying the exhaust air passes through the perforations 86 formed in the perforated tube 78, and is absorbed by the sound-absorbing material 54. The exhaust air, however, must pass through the plug of sound-absorbing material 94 before exhausting to the atmosphere, since the plug of sound-absorbing material 94 is positioned within the perforated tube 78 obstructing fluid flow through the air exhaust passageway 36. As a result, the configuration of the muffler 90 of FIG. 3 provides a decrease in noise emitted by the exhaust air, while also providing an increase in performance (or efficiency) of the hand tool 88 by decreasing the back pressure created by the muffler 90 obstructing the air exhaust passageway 36.

With reference to FIG. 4, yet another construction of a pneumatic hand tool 100 is shown. The pneumatic hand tool 100 illustrated in FIG. 4 is substantially similar to the hand tools 10, 72, 88 of FIGS. 1-3, so description of the hand tool 100 of FIG. 4 is further omitted with like parts being labeled with like reference numerals. A muffler 104 includes sound-absorbing material 54 defining a muffler passageway 108 there through. The muffler passageway 108 through the sound-absorbing material 54 allows exhaust air to pass substantially unobstructed through the muffler 104. The sound-absorbing material 54 is generally configured as a duct including an interior wall 62 and an exterior wall 66. The exterior wall 66 of the sound-absorbing material 54 is positioned in the air exhaust conduit 38 in intimate mating contact with the interior wall 70 of the air exhaust conduit 38. The muffler passageway 108 is configured such that the exhaust air must change direction before exiting the hand tool 100. As shown in FIG. 4, the exhaust air exits the hand tool 100 via an air outlet 112 formed in the side of the handle 22. Further, a perforated plate 116 is coupled to the side of the handle 22 over the air outlet 112 to disperse the exhaust air as it escapes from the hand tool 100 and prevent debris from entering the air exhaust conduit 38.

During operation of the hand tool 100 of FIG. 4, exhaust air flowing through the air exhaust passageway 36 passes through the muffler 104 before exhausting to the atmosphere. The exhaust air passes through the muffler passageway 108, while the sound field accompanying the exhaust air is absorbed by the sound-absorbing material 54. As a result, the configuration of the muffler 104 of FIG. 4 provides a decrease in noise emitted by the exhaust air, while also providing an increase in performance (or efficiency) of the hand tool 100 by decreasing the back pressure created by the muffler 104.

Although the invention has been described in detail with reference to certain preferred embodiments, variations and modifications exist within the scope and spirit of the invention as described and defined in the following claims.

## Claims

1. A pneumatic tool comprising:
a housing defining an interior;
an air motor positioned to lie in the interior;
an air exhaust conduit having an interior conduit wall defining an air exhaust passageway, the air exhaust passageway being in fluid communication with the air motor; and
sound-absorbing material defining a muffler passageway there through, the material positioned to lie within the air exhaust conduit such that the muffler passageway is aligned with the air exhaust passageway and the material lines the interior conduit wall, wherein the muffler passageway passes exhaust air there through.

2. The pneumatic tool of Claim 1, wherein the housing is formed to include a handle and the air exhaust conduit is positioned to lie in the handle.

3. The pneumatic tool of Claim 1, wherein the sound-absorbing material is configured as a duct of sound-absorbing material.

4. The pneumatic tool of Claim 1, wherein the muffler passageway defines an interior wall, and further comprising a perforated tube positioned to lie within the air exhaust conduit and lining the interior wall.

5. The pneumatic tool of Claim 1, wherein the sound-absorbing material comprises an open-cell, sound-absorbing material.

6. The pneumatic tool of Claim 5, wherein the open-cell, sound-absorbing material comprises foam.

7. A sound filter for dampening sound produced by a pneumatic tool having an air exhaust duct in a handle of the tool, the exhaust duct including an interior duct wall, the sound filter comprising:
a perforated tube defining a muffler passageway there through and an exterior tube wall, the perforated tube being positioned within the exhaust duct of the pneumatic tool; and
an open-cell, sound-absorbing material lining the exterior tube wall and the interior duct wall, wherein the muffler passageway passes exhaust air there through.

8. The sound filter of Claim 7, wherein the perforated tube has an open area greater than about 15%.

9. The sound filter of Claim 7, wherein the perforated tube has an open area less than about 35%.

10. The sound filter of Claim 7, wherein the open-cell, sound-absorbing material comprises foam.

11. A pneumatic tool comprising:
a housing defining an interior cavity, the housing formed to include a handle;
an air motor positioned to lie within the interior cavity;
an air inlet extending through the handle and communicating compressed air to the air motor to move the air motor;
an air outlet extending through the handle, the air outlet having an inner surface;
a perforated tube defining a muffler passageway there through and an outer surface, the muffler passageway communicating air away from the air motor, the perforated tube being positioned to lie within the air outlet;
an annular space defined between the inner surface of the air outlet and the outer surface of the perforated tube; and
an open-cell, sound-absorbing material positioned to lie within the annular space such that the material is in mating contact with the inner surface of the air outlet and the outer surface of the perforated tube.

12. The pneumatic tool of claim 11, further comprising a plug positioned within the muffler passageway, the plug comprising a second open-cell, sound-absorbing material, wherein the material positioned in the annular space is a first open-cell, sound-absorbing material.

13. The pneumatic tool of claim 12, wherein the first and second open-cell, sound-absorbing materials comprise the same material.

14. The pneumatic tool of claim 13, wherein the first and second open-cell, sound-absorbing materials comprise foam.

15. The pneumatic tool of claim 12, wherein the first and second open-cell, sound-absorbing materials comprise different materials.

16. The pneumatic tool of claim 15, wherein one of the first and second open-cell, sound-absorbing materials comprises a woven material, and the other of the first and second open-cell, sound-absorbing materials comprises foam.
